(19) Europäisches Patentamt
European Patent Office
Office européen des brevets

(11) EP 4 723 225 A1

(12) **EUROPEAN PATENT APPLICATION**
published in accordance with Art. 153(4) EPC

(43) Date of publication:
**08.04.2026 Bulletin 2026/15**

(21) Application number: **24815220.9**

(22) Date of filing: **16.05.2024**

(51) International Patent Classification (IPC):
***H01M 4/525*** *(2010.01)* ***H01M 4/36*** *(2006.01)*

(52) Cooperative Patent Classification (CPC):
Y02E 60/10

(86) International application number:
**PCT/JP2024/018088**

(87) International publication number:
**WO 2024/247736 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023087772**

(71) Applicant: **Panasonic Intellectual Property Management Co., Ltd.**
**Kadoma-shi, Osaka 571-0057 (JP)**

(72) Inventors:
- **KAWAKITA, Akihiro**
  **Kadoma-shi, Osaka 571-0057 (JP)**
- **INOUE, Katsuya**
  **Kadoma-shi, Osaka 571-0057 (JP)**
- **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NON-AQUEOUS ELECTROLYTE SECONDARY BATTERY, POSITIVE ELECTRODE FOR NON-AQUEOUS ELECTROLYTE SECONDARY BATTERY, AND NON-AQUEOUS ELECTROLYTE SECONDARY BATTERY**

(57) Provided is a non-aqueous electrolyte secondary battery in which reaction resistance is reduced while improving exposure resistance. A positive electrode active material for a non-aqueous electrolyte secondary battery according to the present invention contains: a lithium transition metal composite oxide; and a sulfonic acid compound that is present on the surface of the lithium transition metal composite oxide and is represented by general formula I. When the lithium transition metal composite oxide is added to an alkali solution and subsequently distilled, the distillate is absorbed by sulfuric acid, and the result is analyzed by ion chromatography, a predetermined amount of ammonia is detected. When a filtrate of an aqueous dispersion of the lithium transition metal composite oxide is titrated with hydrochloric acid, the acid consumption amount to a first inflection point of a pH curve is defined as X mol/g, and the acid consumption amount to a second inflection point is defined as Y mol/g, Y - X and X - (Y - X) are each within a predetermined range. (In the formula, A represents a group 1 element or a group 2 element, R represents a hydrocarbon group, and n is 1 or 2.)

EP 4 723 225 A1

Figure 1

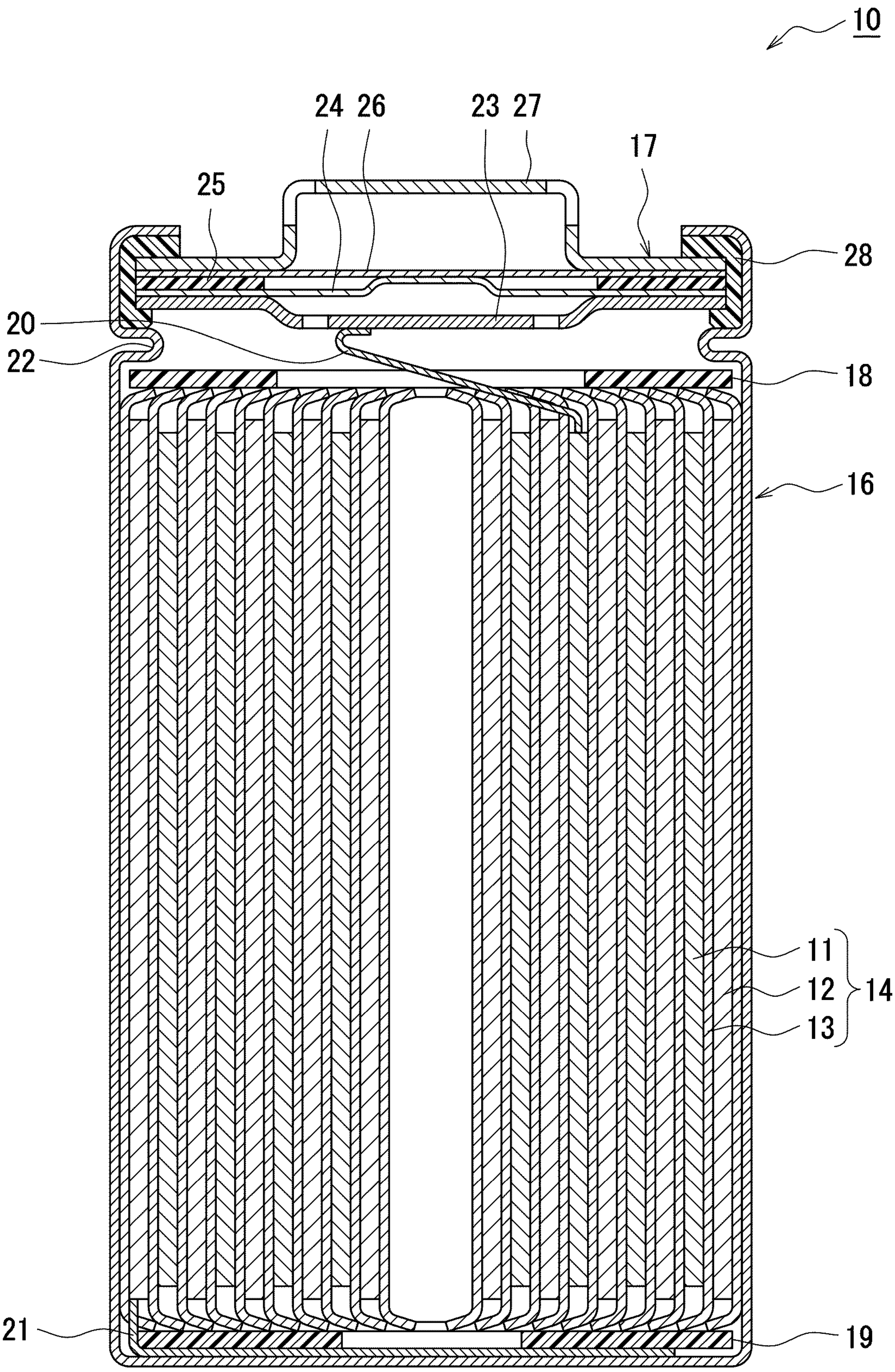

**Description**

TECHNICAL FIELD

The present disclosure relates to a positive electrode active material for a non-aqueous electrolyte secondary battery, a positive electrode for a non-aqueous electrolyte secondary battery, and a non-aqueous electrolyte secondary battery.

BACKGROUND ART

In recent years, applications of non-aqueous electrolyte secondary batteries have expanded to power sources for electric vehicles and power storage devices for utilizing renewable natural energy. The characteristics required for positive electrode active materials used in non-aqueous electrolyte secondary batteries also vary depending on the application. For example, Patent Literature 1 discloses a technique for reducing the amount of gas generated during charging, storage, and the like, with a non-aqueous electrolyte secondary battery including an unwashed positive electrode active material.

CITATION LIST

PATENT LITERATURE

PATENT LITERATURE 1: Japanese Unexamined Patent Application Publication No. 2020-511642

SUMMARY

In a non-aqueous electrolyte secondary battery, the battery capacity may decrease depending on the atmosphere to which the battery is exposed. Furthermore, in order to achieve excellent output characteristics, it is important to reduce the reaction resistance of the non-aqueous electrolyte secondary battery. The technique described in Patent Literature 1 does not investigate the suppression of reduction in the battery capacity due to exposure or reduction in reaction resistance, and there is still room for improvement.

An object of the present disclosure is to provide a non-aqueous electrolyte secondary battery having improved exposure resistance and reduced reaction resistance.

A positive electrode active material for a non-aqueous electrolyte secondary battery in one aspect of the present disclosure includes: a lithium transition metal composite oxide; and a sulfonate compound present on a surface of the lithium transition metal composite oxide, wherein the lithium transition metal composite oxide has a layered structure, and contains greater than or equal to 70 mol% of Ni relative to a total number of moles of metal elements excluding Li; the sulfonate compound is represented by the general formula I; when the lithium transition metal composite oxide is added to an alkaline solution and then distilled, and the distillate is absorbed into sulfuric acid and subjected to ion chromatographic analysis, ammonia is detected in an amount of greater than or equal to 2 ppm and less than or equal to 200 ppm relative to the lithium transition metal composite oxide; and when a filtrate of an aqueous dispersion prepared by dispersing 1 g of the lithium transition metal composite oxide in 70 ml of pure water is titrated with hydrochloric acid, and an acid consumption up to a first inflection point of a pH curve is denoted as X mol/g and an acid consumption up to a second inflection point is denoted as Y mol/g, a value of Y - X is greater than or equal to 50 $\mu$mol/g and less than or equal to 300 $\mu$mol/g and a value of X - (Y - X) is less than or equal to 150 $\mu$mol/g,

[Formula 1]

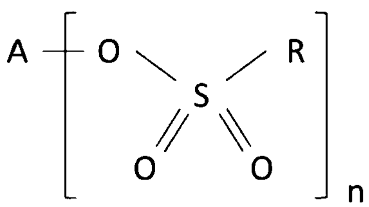

(I)

wherein A represents a group I element or a group II element, R represents a hydrocarbon group, and n represents 1 or 2.

A positive electrode for a non-aqueous electrolyte secondary battery in one aspect of the present disclosure includes the positive electrode active material.

A non-aqueous electrolyte secondary battery in one aspect of the present disclosure comprises the positive electrode including the positive electrode active material, a negative electrode, and a non-aqueous electrolyte.

According to the positive electrode active material for a non-aqueous electrolyte secondary battery in one aspect of the present disclosure, it is possible to reduce reaction resistance while improving the exposure resistance of the non-aqueous electrolyte secondary battery.

BRIEF DESCRIPTION OF DRAWING

FIG. 1 is a longitudinal sectional view of a non-aqueous electrolyte secondary battery as an example of an embodiment.

DESCRIPTION OF EMBODIMENTS

As described above, in a non-aqueous electrolyte secondary battery, it is an important object to reduce reaction resistance while improving exposure resistance. The present inventors have found that the presence of ammonia and a predetermined sulfonate compound together on the surface of a lithium transition metal composite oxide that satisfies the predetermined range of acid consumption can reduce reaction resistance while specifically improving the exposure resistance. Hereinafter, one aspect of an embodiment of the present disclosure will be described in detail with reference to the drawings.

Hereinafter, one aspect of an embodiment of the non-aqueous electrolyte secondary battery according to the present disclosure will be described in detail. In the following description, specific numerical values, materials, and designs may be illustrated. However, other numerical values, materials, and designs may be applied as long as the effects of the present disclosure can be achieved. Hereinafter, a cylindrical battery including a wound electrode assembly accommodated in a cylindrical outer case will be illustrated, but the electrode assembly is not limited to the wound-type, and may be a laminate electrode assembly in which a plurality of positive electrodes and a plurality of negative electrodes are alternately stacked one by one via separators. Furthermore, the outer case is not limited to a cylindrical shape, and may be, for example, rectangular or coin-shaped. The battery case may also be constituted by a laminated sheet including a metal layer and a resin layer.

FIG. 1 is an axial sectional view of a cylindrical secondary battery 10 as an example of an embodiment. As shown in FIG. 1, the secondary battery 10 comprises a wound electrode assembly 14, an electrolyte solution, and an outer case 16 that houses the electrode assembly 14 and the electrolyte. The electrode assembly 14 includes a positive electrode 11, a negative electrode 12, and a separator 13 and has the positive electrode 11 and the negative electrode 12 being wound with the separator 13. The outer case 16 is a bottomed cylindrical metal container having an opening on one side in the axial direction, and the opening of the outer case 16 is closed off by a sealing assembly 17. Hereinafter, for convenience of explanation, the sealing assembly 17 side of the battery is described as the top, and the bottom side of the outer case 16 is described as the bottom.

The positive electrode 11, the negative electrode 12, and the separator 13, which constitute the electrode assembly 14, are all elongated rectangular members, and are alternately laminated in the radial direction of the electrode assembly 14 by being spirally wound in the longitudinal direction. The separator 13 isolates the positive electrode 11 from the negative electrode 12. The negative electrode 12 is formed to be one size larger than the positive electrode 11 to prevent precipitation of lithium. That is, the negative electrode 12 is formed to be longer than the positive electrode 11 in the longitudinal direction and the transverse direction. The two separators 13 are formed at least one size larger than the positive electrode 11 and disposed to sandwich the positive electrode 11, for example. The electrode assembly 14 comprises a positive electrode lead 20 connected to the positive electrode 11 by means of welding or the like, and a negative electrode lead 21 connected to the negative electrode 12 by means of welding or the like. In the electrode assembly 14, the longitudinal direction of the positive electrode 11 and the negative electrode 12 corresponds to the winding direction, while the transverse direction of the positive electrode 11 and the negative electrode 12 corresponds to the axial direction. That is, end surfaces of the positive electrode 11 and the negative electrode 12 in the transverse direction form end surfaces of the electrode assembly 14 in the axial direction.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends outside the insulating plate 19 to the side of the bottom of the outer case 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the outer case 16 by means of welding or the like, and the outer case 16 serves as a negative electrode terminal.

A gasket 28 is provided between the outer case 16 and the sealing assembly 17 to ensure that the interior of the

battery is tightly sealed. The outer case 16 includes a grooved portion 22 formed to have a part of a side surface portion projected inward and support the sealing assembly 17. The grooved portion 22 is preferably annularly formed along the peripheral direction of the outer case 16, supporting the sealing assembly 17 by the upper surface thereof. The sealing assembly 17 is fixed to an upper part of the outer case 16 by means of the grooved portion 22 and an opening end portion of the outer case 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the secondary battery 10, particularly, the positive electrode 11 will be described in detail.

[Positive Electrode]

The positive electrode 11, for example, has a positive electrode core and a positive electrode mixture layer formed on the surface of the positive electrode core. The positive electrode mixture layer is preferably formed on both the surfaces of the positive electrode core. As the positive electrode core, a foil of a metal that is stable in the potential range of the positive electrode 11, such as aluminum or an aluminum alloy, and a film with the metal disposed on the surface layer, or the like can be used. The thickness of the positive electrode core is, for example, greater than or equal to 10 μm and less than or equal to 30 μm. The positive electrode mixture layer includes, for example, a positive electrode active material, a conductive agent, and a binder. The thickness of the positive electrode mixture layer is, for example, greater than or equal to 10 μm and less than or equal to 150 μm on one side of the positive electrode current collector. The positive electrode 11 can be produced, for example, by applying a positive electrode mixture slurry including a positive electrode active material, a conductive agent, and a binder onto the surface of the positive electrode current collector, drying the coating, and rolling the dried coating to form the positive electrode mixture layer on each of both the surfaces of the positive electrode current collector.

Examples of the conductive agent included in the positive electrode mixture layer include carbon materials such as carbon black (CB) including acetylene black (AB) and Ketjenblack, carbon nanotubes (CNT), graphene, and graphite. These materials may be used singly or in combination of two or more thereof. The content ratio of the conductive agent in the positive electrode mixture layer is, for example, greater than or equal to 0.1 mass% and less than or equal to 10 mass% relative to the total mass of the positive electrode mixture layer.

Examples of the binder included in the positive electrode mixture layer include fluorine-based resins such as polytetrafluoroethylene (PTFE) and polyvinylidene fluoride (PVDF), polyacrylonitrile (PAN), polyimide-based resins, acrylic-based resins, polyolefin-based resins. These binders may be used singly or in combination of two or more thereof. The content ratio of the binder in the positive electrode mixture layer is, for example, greater than or equal to 0.1 mass% and less than or equal to 10 mass% relative to the total mass of the positive electrode mixture layer.

The positive electrode active material included in the positive electrode mixture layer 31 includes a lithium transition metal composite oxide. The lithium transition metal composite oxide includes, for example, secondary particles each formed by aggregation of primary particles. When the lithium transition metal composite oxide is added to an alkaline solution and then distilled, and the distillate is absorbed into sulfuric acid and subjected to ion chromatographic analysis, ammonia is detected in an amount of greater than or equal to 2 ppm and less than or equal to 200 ppm relative to the mass of the lithium transition metal composite oxide. In addition, when a filtrate of an aqueous dispersion prepared by dispersing 1 g of the lithium transition metal composite oxide in 70 ml of pure water is titrated with hydrochloric acid, and an acid consumption up to a first inflection point of a pH curve is denoted as X mol/g and an acid consumption up to a second inflection point is denoted as Y mol/g, a value of Y - X is greater than or equal to 50 μmol/g and less than or equal to 300 μmol/g and a value of X - (Y - X) is less than or equal to 150 μmol/g. Accordingly, the surface of the lithium transition metal composite oxide can be adequately protected without a water-washing treatment after firing. On the surfaces of the primary particles forming the lithium transition metal composite oxide, an ammonium compound is present in an amount of, for example, greater than or equal to 2 ppm and less than or equal to 200 ppm relative to the mass of the composite oxide.

The lithium transition metal composite oxide has a layered structure. Examples of the layered structures of the lithium transition metal composite oxide include a layered structure belonging to the space group R-3m and a layered structure belonging to the space group C2/m. From the viewpoint of high capacity, crystallographic stability, the lithium transition metal composite oxide preferably has a layered structure belonging to the space group R-3m. The layered

structure of the lithium transition metal composite oxide may include a transition metal layer, a Li layer, and an oxygen layer.

The lithium transition metal composite oxide contains greater than or equal to 70 mol% of Ni relative to the total number of moles of metal elements excluding Li. Accordingly, higher battery capacity can be attained. The content ratio of Ni may be, for example, greater than or equal to 80 mol% and less than or equal to 98 mol%. The lithium transition metal composite oxide may further include one or more elements selected from the group consisting of Co, Al, and Mn, in addition to Ni. The content ratio of each of Co, Al, and Mn in the lithium transition metal composite oxide is, for example, greater than or equal to 0 mol% and less than or equal to 30 mol% relative to the total number of moles of metal elements excluding Li. The total content ratio of Co, Al, and Mn is, for example, greater than or equal to 0 mol% and less than or equal to 30 mol%.

The lithium transition metal composite oxide is, for example, a composite oxide represented by the general formula $Li_aNi_xM1_yM2_zO_{2-b}$, wherein $0.8 \leq a \leq 1.2$, $0.70 \leq x \leq 0.98$, $0 \leq y \leq 0.30$, $0 \leq z \leq 0.10$, $0 \leq b \leq 0.05$, $x + y + z = 1$, M1 represents one or more elements selected from the group consisting of Co, Al, and Mn, and M2 represents one or more elements selected from the group consisting of Sr, Ca, Nb, Ti, Zr, and W. The proportion of metal elements contained in the lithium transition metal composite oxide can be measured using, for example, an inductively coupled plasma atomic emission spectrometer (ICP-AES).

The BET specific surface area of the lithium transition metal composite oxide is preferably less than or equal to 0.9 $m^2/g$, and more preferably less than or equal to 0.8 $m^2/g$. The BET specific surface area of the composite oxide is, for example, greater than or equal to 0.5 $m^2/g$ and less than or equal to 0.8 $m^2/g$. The BET specific surface area is measured according to the BET method described in JIS R1626. Specifically, the BET nitrogen adsorption isotherm is measured using an automatic specific surface area/pore distribution analyzer (Autosorb iQ3-MP, manufactured by Quantachrome), with dried composite oxide particles. The specific surface area is then calculated using the BET multipoint method based on the amount of nitrogen adsorbed.

The particle diameter of the primary particles forming the lithium transition metal composite oxide is, for example, greater than or equal to 0.02 μm and less than or equal to 2 μm. The particle diameter of the primary particles is measured as the diameter of a circumscribed circle in particle images observed by scanning electron microscopy (SEM). The average particle diameter of the secondary particles of the lithium transition metal composite oxide is, for example, greater than or equal to 2 μm and less than or equal to 30 μm. As used herein, the average particle diameter refers to the volume-based median diameter (D50). The D50 means the particle diameter at which the cumulative frequency in the volume-based particle size distribution reaches 50% from the smaller particle side, which is also referred to as the median diameter. The particle size distribution of the secondary particles can be measured using a laser diffraction particle size distribution measuring device (e.g., MT3000II, manufactured by MicrotracBEL Corp.), with water used as the dispersion medium.

As described above, when a filtrate of an aqueous dispersion prepared by dispersing 1 g of the lithium transition metal composite oxide in 70 ml of pure water is titrated with hydrochloric acid, and the acid consumption up to a first inflection point of a pH curve is denoted as X mol/g and the acid consumption up to a second inflection point is denoted as Y mol/g, the value of Y - X is greater than or equal to 50 μmol/g and less than or equal to 300 μmol/g and the value of X - (Y - X) is less than or equal to 150 μmol/g. In other words, the lithium transition metal composite oxide includes water-soluble alkali components that can be titrated with an acid. The value of Y - X is preferably greater than or equal to 70 μmol/g and less than or equal to 250 μmol/g, and more preferably greater than or equal to 80 μmol/g and less than or equal to 220 μmol/g. The value of X - (Y - X) is preferably greater than or equal to 80 μmol/g, and more preferably greater than or equal to 50 μmol/g.

The lithium transition metal composite oxide includes alkali components in an amount corresponding to the above-described acid consumption. Examples of the alkali component include lithium hydroxide (LiOH) and lithium carbonate ($Li_2CO_3$). Furthermore, the lithium transition metal composite oxide includes greater than or equal to 2 ppm and less than or equal to 200 ppm of ammonium compounds, in terms of ammonium molecule. The ammonium compounds include, for example, ammonia and ammonium salts. Lithium carbonate, lithium hydroxide, and an ammonium compound may be present inside the particles of the composite oxide at the interface of the primary particles and on the surfaces of the secondary particles each formed by aggregation of the primary particles. Preferably, these are uniformly distributed over the entire surface of the primary particles, without being localized to specific areas.

A specific quantitative method of the water-soluble alkali component extracted from the lithium transition metal composite oxide is as follows. The following titration method is generally referred to as the Warder method.

(1) 1 g of the lithium transition metal composite oxide is added to 30 ml of pure water and stirred to prepare a suspension obtained by dispersing the active material in water.

(2) The suspension is filtered, and pure water is added to the filtrate to make up the volume to 70 mL, thereby obtaining a filtrate including water-soluble alkali components eluted from the active material.

(3) While measuring the pH of the filtrate, hydrochloric acid is added dropwise little by little to determine the amount (titration volume) of hydrochloric acid consumed up to the first inflection point of the pH curve (around pH 8), denoted as X mol/g, and the amount of hydrochloric acid consumed up to the second inflection point (around pH 4), denoted as

Y mol/g. Note that the inflection points correspond to the peak positions of the differential value with respect to the titration volume.

The amount of ammonium compounds present on the surfaces of the primary particles can be quantitatively determined by ion chromatographic analysis. The detailed procedure for measurement is as follows.

(1) 1 g of the lithium transition metal composite oxide is transferred to a distillation flask, to which 300 mL of pure water is added.
(2) To the resulting aqueous dispersion of the lithium transition metal composite oxide, 10 mL of an aqueous solution (30%) of sodium hydroxide is added to prepare an alkaline solution, boiling stones are then added, and the mixture is distilled.
(3) The distilled and evaporated solution was cooled and collected, then added to 40 mL of sulfuric acid (25 mmol/L), and diluted with pure water to a total volume of 200 mL to prepare a sample solution.
(4) The sample solution was analyzed by ion chromatography, and the amount of ammonia in the sample was calculated based on the amount of ammonium ions detected.

To the surfaces of the primary particles of the lithium transition metal composite oxide, at least one surface coating agent may be adhered that is selected from the group consisting of a zirconium compound, a tungsten compound, a phosphorus compound, a boron compound, and a rare earth compound. The surface coating agent is adhered to at least one of the group consisting of the surfaces of primary particles present inside the particles of the composite oxide, i.e., inside the secondary particles, and the surfaces of particles of the composite oxide, i.e., the surfaces (surfaces of the secondary particles) of the primary particles present on the surfaces of the secondary particles. When the surface coating agent is present, gas generation during charging, storage, and the like is suppressed without causing problems such as a decrease in capacity, for example. Preferably, the surface coating agent is uniformly distributed over the surfaces of the primary particles, without being localized to specific areas. The content ratio thereof is preferably, in terms of metal element constituting the compound, greater than or equal to 0.01 mol% and less than or equal to 0.5 mol% relative to the total number of moles of metal elements excluding Li in the lithium transition metal composite oxide.

The zirconium compound, tungsten compound, phosphorus compound, boron compound, and rare earth compound may be in the form of an oxide, a nitride, a hydroxide, or the like. Specific examples thereof include zirconium oxide, tungsten oxide, lithium tungstate, lithium phosphate, boron oxide, lithium tetraborate, samarium hydroxide, erbium hydroxide, samarium oxide, and erbium oxide. The adhesion of these compounds to the surfaces of the primary particles present inside or on the surfaces of the secondary particles and the content ratio in terms of metal element can be observed and measured using a scanning electron microscope (SEM) and an inductively coupled plasma (ICP) optical emission spectrometer.

The lithium transition metal composite oxide is produced through a first step of synthesizing a metal hydroxide containing Ni, Co, Mn, Al, and the like by, for example, a co-precipitation method; a second step of subjecting the metal hydroxide to oxidative calcination heat treatment to obtain a metal oxide; and a third step of mixing the metal oxide with lithium hydroxide and firing the mixture (synthesis step). The lithium transition metal composite oxide obtained in the third step may be subjected to a water-washing treatment, but is preferably used in a substantially unwashed state.

In the third step, the mixture is fired at a temperature of greater than or equal to 700°C. A preferred firing temperature range is greater than or equal to 700°C and less than or equal to 900°C. The firing is preferably carried out in an oxygen stream. In the third step, from the viewpoint of discharge capacity, a lithium source (lithium hydroxide) in excess of the stoichiometric amount required for the target product is used. For example, the amount of lithium source is preferably greater than or equal to 1.0 times and less than or equal to 1.1 times the stoichiometric amount relative to the composite oxide.

The synthesis step of the lithium transition metal composite oxide is not limited to the above-described step, and may include, for example, a known synthesis method of obtaining a lithium transition metal composite oxide by mixing a precursor obtained by coprecipitating or mixing compounds such as a hydroxide, an oxide, and a carbonate compound including at least one selected from the group consisting of Ni, Co, Mn, Al, and M (where M represents at least one element selected from Ca, Sr, W, Mg, Mo, Nb, Ti, Si, Mn, and Zr) with a Li source and firing the mixture. In the case where the precursor does not include compounds such as M, these compounds such as M may be mixed and fired when the precursor and the Li source are mixed and fired. These compounds may also be pulverized to appropriately adjust the particle shape or particle diameter or may be used after adjusting the water content, including hydrates.

The above-described production process of the lithium transition metal composite oxide preferably further includes a fourth step of adding a compound serving as an ammonia source and a compound serving as a carbonate source. In the fourth step, a compound such as ammonium carbonate, which serves as both an ammonia source and a carbonate source, may be added. In the fourth step, an aqueous solution of ammonium carbonate, for example, is added dropwise or sprayed onto the unwashed lithium transition metal composite oxide, followed by heat treatment at a

temperature lower than the firing temperature in the third step. An example of the heat treatment conditions includes a temperature of greater than or equal to 200°C and less than or equal to 500°C, and a heating time of greater than or equal to 1 hour and less than or equal to 4 hours. Since excess lithium is present on the particle surface of the unwashed lithium transition metal composite oxide, for example, the addition of ammonium carbonate to the particle surface results in the formation of lithium carbonate and ammonium compounds.

The positive electrode active material includes, in addition to the lithium transition metal composite oxide, a sulfonate compound represented by the general formula I below, the sulfonate compound being present on the surface of the lithium transition metal composite oxide; and the positive electrode active material includes a lithium transition metal composite oxide including a predetermined amount of the ammonia compound and alkali component and a sulfonate compound present on the surface of the lithium transition metal composite oxide, thereby properly protecting the surface of the positive electrode active material and achieving both improved exposure resistance and reduced reaction resistance:

[Formula 2]

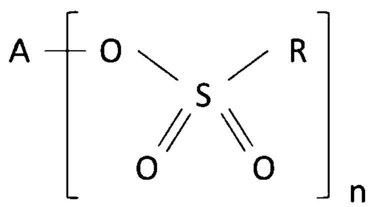

(I)

wherein A represents a group I element or a group II element, R represents a hydrocarbon group, and n represents 1 or 2.

The positive electrode mixture layer may include, in addition to the positive electrode active material of the present embodiment, other positive electrode active materials. Examples of such other positive electrode active materials include: positive electrode active materials including a lithium transition metal composite oxide in which at least one of the group consisting of the ammonia content, Y - X, or X - (Y - X) falls outside a predetermined range, or a lithium transition metal composite oxide having a Ni content ratio of less than 70 mol%; and positive electrode active materials in which no sulfonate compound is present on the surface of the lithium transition metal composite oxide.

In the general formula I, A preferably represents a group I element and more preferably Li. Thus, the direct current resistance can be further reduced. Note that when A represents a group I element, n = 1.

In the general formula I, R preferably represents an alkyl group. R more preferably represents an alkyl group having less than or equal to 5 carbon atoms, still more preferably an alkyl group having less than or equal to 3 carbon atoms, and particularly preferably a methyl group. In addition, a part of carbon-bonded hydrogens in R may be substituted with fluorine. However, it is not possible that all of the carbon-bonded hydrogens in R are substituted with fluorine. The smaller the molecular weight of R, the lower the direct current resistance tends to be.

Examples of the sulfonate compound include lithium methanesulfonate, lithium ethanesulfonate, lithium propanesulfonate, sodium methanesulfonate, magnesium methanesulfonate, and lithium fluoromethanesulfonate.

The amount of the sulfonate compound included in the positive electrode 11 is preferably greater than or equal to 0.1 mass% and less than or equal to 2 mass%, and more preferably greater than or equal to 0.25 mass% and less than or equal to 1.0 mass% relative to the mass of the lithium transition metal composite oxide.

The presence of the sulfonate compound in the positive electrode 11 can be confirmed by Fourier transform infrared spectroscopy (FT-IR). In an infrared absorption spectrum obtained by FT-IR, the positive electrode 11 may have at least one absorption peak near 1238 $cm^{-1}$, 1175 $cm^{-1}$, 1065 $cm^{-1}$, and 785 $cm^{-1}$.

In an infrared absorption spectrum obtained by FT-IR, the positive electrode 11 including lithium methanesulfonate, for example, have absorption peaks near 1238 $cm^{-1}$, 1175 $cm^{-1}$, 1065 $cm^{-1}$, and 785 $cm^{-1}$. The peak near 1238 $cm^{-1}$, 1175 $cm^{-1}$, and 1065 $cm^{-1}$ is an absorption peak caused by SO stretching vibration derived from lithium methanesulfonate. The peak near 785 $cm^{-1}$ is an absorption peak caused by CS stretching vibration derived from lithium methanesulfonate.

In the positive electrode 11 including a sulfonate compound other than lithium methanesulfonate, an absorption peak derived from the sulfonate compound can be identified in the same manner as in the positive electrode 11 including lithium methanesulfonate. Note that the presence of the sulfonate compound in the positive electrode 11 can be confirmed by ICP, atomic absorption spectrometry, X-ray photoelectron spectroscopy (XPS), radiation XRD measurement, TOF-SIMS, H-NMR, or the like.

The positive electrode active material can be produced, for example, by adding a sulfonic acid solution to an unwashed lithium transition metal composite oxide, thereby allowing a sulfonate compound to adhere to the surface of the lithium transition metal composite oxide (addition step). The sulfonic acid solution is, for example, a methanesulfonic acid solution obtained by dissolving methanesulfonic acid in water. A lithium compound remains on the surface of the lithium transition metal composite oxide, and even when a sulfonic acid solution is added, a sulfonate compound including lithium

is formed. The lithium compound or lithium compound solution may be added to the lithium transition metal composite oxide together with the sulfonic acid solution. Alternatively, a mixed solution prepared in advance by mixing the sulfonic acid solution with the lithium compound or lithium compound solution may be added to the lithium transition metal composite oxide. The lithium compound may be, for example, LiOH, and the lithium compound solution may be, for example, an LiOH solution obtained by dissolving LiOH in water. The amounts of the lithium compound and the sulfonic acid solution added to the lithium transition metal composite oxide preferably satisfy the relation $0 \leq$ Li compound/sulfonic acid $\leq 1.3$ in terms of molar ratio. After the addition step, the drying step may be performed under a vacuum atmosphere, for example.

[Negative Electrode]

The negative electrode 12 may have, for example, a negative electrode core and a negative electrode mixture layer formed on the surface of the negative electrode core, or a metal Li foil may be used as the negative electrode 12. The negative electrode 12 may have a negative electrode core, and lithium metal may be deposited on the surface of the negative electrode core by charging. When the negative electrode 12 has a negative electrode mixture layer, the negative electrode mixture layer is preferably formed on both the surfaces of the negative electrode core. As the negative electrode core, a metal foil that is stable in the potential range of the negative electrode 12, such as copper or a copper alloy, or a film with the metal disposed on a surface layer may be used. The thickness of the negative electrode core is, for example, greater than or equal to 5 μm and less than or equal to 30 μm. The negative electrode mixture layer includes, for example, a negative electrode active material and a binder. The thickness of the negative electrode mixture layer is, for example, greater than or equal to 10 μm and less than or equal to 150 μm on one side of the negative electrode core. The negative electrode 12 can be produced, for example, by coating a negative electrode mixture slurry including a negative electrode active material and a binder on the surface of the negative electrode core, drying the coating, and rolling the dried coating to form the negative electrode mixture layer on both the surfaces of the negative electrode core.

As the negative electrode active material included in the negative electrode mixture layer, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by $SiO_x$ ($0.5 \leq x \leq 1.6$) or Si-containing compounds in which fine Si particles are dispersed in a lithium silicate phase represented by $Li_{2y}SiO_{(2+y)}$ ($0 < y < 2$), may be used in combination with graphite.

Examples of the binder included in the negative electrode mixture layer include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

[Separator]

As the separator 13, a porous sheet having ion permeability and insulation properties may be used. Specific examples of the porous sheet include microporous films, woven fabrics, and nonwoven fabrics. Suitable materials for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the group consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

[Non-Aqueous Electrolyte]

The non-aqueous electrolyte has, for example, lithium ion conductivity. The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain

halogen-substituted products in which at least some of the hydrogen atoms in the solvent molecules are replaced with halogen atoms such as fluorine. Examples of the halogen-substituted products include fluorinated cyclic carbonate esters such as fluoroethylene carbonate (FEC), fluorinated linear carbonate esters, and fluorinated linear carboxylic acid esters such as methyl fluoro-propionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include $LiClO_4$, $LiBF_4$, $LiPF_6$, $LiAlC_4$, $LiSbF_6$, LiSCN, $LiCF_3SO_3$, $LiCF_3CO_2$, $LiAsF_6$, $LiB_{10}Cl_{10}$, lower aliphatic carboxylic acid lithium salts, LiCl, LiBr, LiI, phosphate salts, borate salts, and imide salts. Examples of phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 mol and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

EXAMPLES

Hereinafter, the present disclosure will be described in more detail with reference to Examples, but the present disclosure is not limited to Examples below.

<Example 1>

[Production of Positive Electrode Active Material]

A metal hydroxide represented by $[Ni_{0.90}Co_{0.05}Al_{0.05}](OH)_2$ obtained by a coprecipitation method was fired at 500°C for 8 hours to obtain a metal oxide. The metal oxide and LiOH were mixed at a molar ratio of 1:1.02, and the mixture was fired at 800°C for 3 hours under an oxygen stream to obtain a lithium transition metal composite oxide (fired product). The fired product was composed of secondary particles each formed by aggregation of primary particles. An aqueous solution of ammonium carbonate was sprayed onto the unwashed fired product and then heated at 200°C for 3 hours to obtain a lithium transition metal composite oxide. The acid consumption Y - X and X - (Y - X) per gram of the lithium transition metal composite oxide were determined by the above-described Warder method, and the ammonia content was determined by the chromatographic analysis. The spraying conditions of the aqueous solution of ammonium carbonate were adjusted so that these values corresponded the values shown in Table 1 (the same applies hereinafter).

A methanesulfonate solution was added to the above-described lithium transition metal composite oxide (addition step). The concentration of the methanesulfonate solution was 10 mass%, and the amount of methanesulfonic acid added was 0.5 mass% relative to the total mass of the lithium transition metal composite oxide. After the addition step, a drying step was performed under a vacuum atmosphere to obtain a positive electrode active material of Example 1. It was confirmed by Fourier transform infrared spectroscopy (FT-IR) that lithium methanesulfonate was present on the surface of the positive electrode active material.

The positive electrode active material was left for 4 weeks under an environment of a temperature of 25°C and a dew point of -20°C, while being exposed to dry air at a wind speed of 4 m/s, to produce an exposed sample. In addition, the positive electrode active material was left for 4 weeks under an environment of a temperature of 25°C and a dew point of -40°C, without exposure to dry air, to produce an unexposed sample.

[Production of Positive Electrode]

The exposed sample, acetylene black, and polyvinylidene fluoride were mixed at a mass ratio of 85:10:5 and kneaded using an agate mortar and pestle to form a thin pellet. The pellet was then rolled to a predetermined thickness using a roller and then punched into a predetermined circular shape to obtain a positive electrode containing the exposed sample. Using an unexposed sample, a positive electrode containing the unexposed sample was produced in the same manner.

[Preparation of Non-Aqueous Electrolyte]

Ethylene carbonate (EC), methyl ethyl carbonate (MEC), and dimethyl carbonate (DMC) were mixed at a volume ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell]

The positive electrode containing the exposed sample and the negative electrode made of lithium metal were laminated to face each other via a separator to produce an electrode assembly. Subsequently, the electrode assembly and the non-aqueous electrolyte were inserted into an aluminum coin-shaped outer case and sealed by crimping with a press machine to produce an exposed test cell. Using a positive electrode containing an unexposed sample, an unexposed test cell was produced in the same manner.

[Evaluation of Exposure Resistance]

Each of the exposed and unexposed test cells was charged at a constant current of 0.1 C under a temperature environment of 25°C until the cell voltage reached 4.3 V (vsLi) and then charged at a constant voltage of 4.3 V (vsLi) until the current value reached 0.01 C. After 1 hour, the test cell was discharged to a cell voltage of 2.5 V (vsLi) at a constant current of 0.1 C. Thereafter, the test cell was again charged to 4.3 V (vsLi) at a constant current of 0.1 C under a temperature environment of 25°C and then charged at a constant voltage of 4.3 V (vsLi) until the current value reached 0.01 C.

Subsequently, each of the exposed and unexposed samples was discharged at a constant current of 0.2 C until the cell voltage reached 2.5 V (vsLi), and the exposure resistance was determined using the following equation.

Exposure resistance = (discharge capacity of exposed test cell)/(discharge capacity of unexposed test cell)

[Evaluation of Reaction Resistance]

The test cell was charged to 4.3 V (vsLi) at a constant current of 0.1 C under a temperature environment of 25°C and then charged at a constant voltage of 4.3 V (vsLi) until the current value reached 0.01 C. After 1 hour, the test cell was discharged to a cell voltage of 2.5 V (vsLi) at a constant current of 0.1 C. Thereafter, the test cell was again charged to 4.3 V (vsLi) at a constant current of 0.1 C under a temperature environment of 25°C and then charged at a constant voltage of 4.3 V (vsLi) until the current value reached 0.01 C. Then, after 2 hours under a temperature environment of 10°C, the AC impedance of the test cell was measured at an applied voltage of 10 mV and a measurement frequency range of greater than or equal to 0.01 Hz and less than or equal to 200 kHz using Solartron 1255B (manufactured by Solartron Corporation). The Nyquist plot was drawn from the measurement date to determine the reaction resistance based on an arc in the range of greater than or equal to 10 Hz and less than or equal to 0.1 Hz.

<Example 2>

A test cell was produced and evaluated in the same manner as in Example 1, except that in the production of the positive electrode active material, an aqueous solution of ammonium carbonate was added, followed by the addition of tungsten oxide powder. Note that the amount of tungsten oxide added was adjusted to 0.1 mol% in terms of W, relative to the total number of moles of metal elements excluding Li in the composite oxide.

<Example 3>

A test cell was produced and evaluated in the same manner as in Example 1, except that in the production of the positive electrode active material, an aqueous solution of ammonium carbonate was added, followed by the addition of an aqueous solution of samarium sulfate. Note that the amount of samarium sulfate added was adjusted to 0.1 mol% in terms of Sm, relative to the total number of moles of metal elements excluding Li in the composite oxide.

<Example 4>

A test cell was produced and evaluated in the same manner as in Example 1, except that ammonium zirconium was used instead of ammonium carbonate in the production of the positive electrode active material. In other words, an aqueous solution of ammonium zirconium carbonate was sprayed onto the unwashed fired product, followed by heat treatment. Note that the amount of ammonium zirconium carbonate added was adjusted to 0.1 mol% in terms of Zr, relative to the total number of moles of metal elements excluding Li in the composite oxide.

<Examples 5 and 6>

A test cell was produced and evaluated in the same manner as in Example 1, except that in the production of the positive electrode active material, the spray conditions of the aqueous solution of ammonium carbonate were adjusted such that Y - X, X - (Y - X), and the ammonia content correspond to the values shown in Table 1.

<Comparative Example 1>

A test cell was produced and evaluated in the same manner as in Example 1, except that the unwashed fired product was directly used as the positive electrode active material in the production of the positive electrode active material.

<Comparative Example 2>

A test cell was produced and evaluated in the same manner as in Example 1, except that aqueous ammonia was sprayed instead of the aqueous solution of ammonium carbonate in the production of the positive electrode active material.

<Comparative Example 3>

A test cell was produced and evaluated in the same manner as in Example 1, except that the addition step was omitted in the production of the positive electrode active material.

<Comparative Example 4>

A test cell was produced and evaluated in the same manner as in Example 1, except that in the production of the positive electrode active material, the unwashed fired product was directly used as the lithium transition metal composite oxide, the addition step was omitted, and the lithium transition metal composite oxide was washed with water and then subjected to a drying step under a vacuum atmosphere at 180°C for 2 hours. Note that the water washing of the lithium transition metal composite oxide was performed by adding water so that the slurry concentration was 1500 g/L, followed by stirring for 15 minutes.

<Comparative Example 5>

A test cell was produced and evaluated in the same manner as in Example 1, except that in the production of the positive electrode active material, aqueous ammonia was sprayed instead of the aqueous solution of ammonium carbonate, the addition step was omitted, and the lithium transition metal composite oxide was washed with water and then subjected to a drying step under a vacuum atmosphere at 180°C for 2 hours. Note that the water washing of the lithium transition metal composite oxide was performed by adding water so that the slurry concentration was 1500 g/L, followed by stirring for 15 minutes.

<Comparative Example 6>

A test cell was produced and evaluated in the same manner as in Example 1, except that in the production of the positive electrode active material, the unwashed fired product was directly used as the lithium transition metal composite oxide, and before the addition step, the lithium transition metal composite oxide was washed with water and then subjected to a drying step under a vacuum atmosphere at 180°C for 2 hours. Note that the water washing of the lithium transition metal composite oxide was performed by adding water so that the slurry concentration was 1500 g/L, followed by stirring for 15 minutes.

<Example 7>

A test cell was produced and evaluated in the same manner as in Example 1, except that in the production of the positive electrode active material, a nickel-cobalt-aluminum composite hydroxide represented by $[Ni_{0.82}Co_{0.15}Al_{0.03}](OH)_2$ as the metal hydroxide was used, and the spray conditions of the aqueous solution of ammonium carbonate were adjusted such that Y - X, X - (Y - X), and the ammonia content correspond to the values shown in Table 1.

<Comparative Example 7>

A test cell was produced and evaluated in the same manner as in Example 7, except that in the production of the positive electrode active material, the unwashed fired product was directly used as the lithium transition metal composite oxide.

<Example 8>

A test cell was produced and evaluated in the same manner as in Example 1, except that in the production of the positive electrode active material, a nickel-cobalt-manganese composite hydroxide represented by $[Ni_{0.90}Co_{0.05}Mn_{0.05}](OH)_2$ as the metal hydroxide was used, and the spray conditions of the aqueous solution of ammonium carbonate were adjusted such that Y - X, X - (Y - X), and the ammonia content correspond to the values shown in Table 1.

<Comparative Example 8>

A test cell was produced and evaluated in the same manner as in Example 8, except that in the production of the positive electrode active material, the unwashed fired product was directly used as the lithium transition metal composite oxide.

The evaluation results of the test cells in Examples and Comparative Examples are shown in Table 1. In Table 1,

the exposure resistance and reaction resistance of the test cells in Examples 1 to 5 and Comparative Examples 1 to 6 were expressed relatively, taking the exposure resistance and reaction resistance of the test cell in Example 6 as 100. In addition, the exposure resistance and reaction resistance of the test cell in Comparative Example 7 were expressed relatively, taking the exposure resistance and reaction resistance of the test cell in Example 7 as 100, and the exposure resistance and reaction resistance of the test cell in Comparative Example 8 were expressed relatively, taking the exposure resistance and reaction resistance of the test cell in Example 8 as 100. Table 1 also shows Y-X, X-(Y-X), and the ammonia content.

[Table 1]

| | Positive electrode | | | | | | | Evaluation result | |
|---|---|---|---|---|---|---|---|---|---|
| | Lithium Transition metal composite oxide [mol%] | Surface coating agent | | Amount of methanesulfonic acid solution added [mass%] | Ammonia content [ppm] | X-(Y-X) [μmol/g] | Y-X [μmol/g] | Exposure resistance | Reaction resistance |
| | | Element | Addition amount [mol%] | | | | | | |
| Examplel | NCA 90/5/5 | - | - | 0.5 | 120 | 45 | 210 | 99 | 98 |
| Example2 | | W | 0.1 | 0.5 | 120 | 42 | 210 | 99 | 98 |
| Example3 | | Sm | 0.1 | 0.5 | 120 | 41 | 210 | 99 | 99 |
| Example4 | | Zr | 0.1 | 0.5 | 3 | 50 | 200 | 97 | 98 |
| Example5 | | - | - | 0.5 | 50 | 120 | 160 | 98 | 95 |
| Example6 | | - | - | 0.5 | 170 | 40 | 230 | 100 | 100 |
| Comparative Examplel | | - | - | - | less than or equal to 1 | 300 | 100 | 75 | 98 |
| Comparative Example2 | | - | - | 0.5 | 120 | 280 | 110 | 83 | 99 |
| Comparative Example3 | | - | - | - | 120 | 45 | 210 | 81 | 103 |
| Comparative Example4 | | - | - | - | less than or equal to 1 | 30 | 45 | 86 | 250 |
| Comparative Example5 | | - | - | - | 120 | 30 | 45 | 85 | 250 |
| Comparative Example6 | | - | - | 0.5 | less than or equal to 1 | 30 | 45 | 99 | 210 |
| Example7 | NCA 82/15/3 | - | - | 0.5 | 170 | 40 | 230 | 100 | 100 |
| Comparative Example7 | | - | - | 0.5 | less than or equal to 1 | 220 | 100 | 82 | 98 |
| Example8 | NCM 90/5/5 | - | - | 0.5 | 170 | 40 | 230 | 100 | 100 |
| Comparative Example8 | | - | - | 0.5 | less than or equal to 1 | 300 | 100 | 82 | 98 |

In Table 1, all test cells in Examples exhibited excellent exposure resistance and lower reaction resistance as compared with the corresponding test cells in Comparative Examples. Accordingly, it is found that the presence of ammonia and a predetermined sulfonate compound together on the surface of a lithium transition metal composite oxide that satisfies the predetermined range of acid consumption can reduce reaction resistance while specifically improving the exposure resistance.

The present disclosure will be further described with reference to embodiments below.

Constitution 1:

A positive electrode active material for a non-aqueous electrolyte secondary battery, including:

a lithium transition metal composite oxide; and
a sulfonate compound present on a surface of the lithium transition metal composite oxide, wherein
the lithium transition metal composite oxide has a layered structure, and contains greater than or equal to 70 mol% of Ni relative to a total number of moles of metal elements excluding Li,
the sulfonate compound is represented by the general formula I,
when the lithium transition metal composite oxide is added to an alkaline solution and then distilled, and the distillate is absorbed into sulfuric acid and subjected to ion chromatographic analysis, ammonia is detected in an amount of greater than or equal to 2 ppm and less than or equal to 200 ppm relative to the lithium transition metal composite oxide, and
when a filtrate of an aqueous dispersion prepared by dispersing 1 g of the lithium transition metal composite oxide in 70 ml of pure water is titrated with hydrochloric acid, and an acid consumption up to a first inflection point of a pH curve is denoted as X mol/g and an acid consumption up to a second inflection point is denoted as Y mol/g, a value of Y - X is greater than or equal to 50 μmol/g and less than or equal to 300 μmol/g and a value of X - (Y - X) is less than or equal to 150 μmol/g,

[Formula 3]

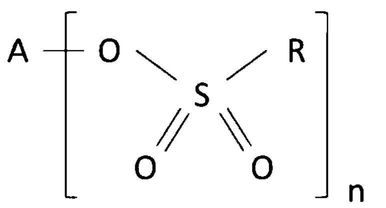

(I)

wherein A represents a group I element or a group II element, R represents a hydrocarbon group, and n represents 1 or 2.

Constitution 2:

The positive electrode active material for a non-aqueous electrolyte secondary battery according to Constitution 1, wherein the lithium transition metal composite oxide includes secondary particles each formed by aggregation of primary particles.

Constitution 3:

The positive electrode active material for a non-aqueous electrolyte secondary battery according to Constitution 1 or 2, wherein A represents a group I element.

Constitution 4:

The positive electrode active material for a non-aqueous electrolyte secondary battery according to Constitution 1 or 2, wherein A represents Li.

Constitution 5:

The positive electrode active material for a non-aqueous electrolyte secondary battery according to any one of

Constitutions 1 to 4, wherein R represents an alkyl group.

Constitution 6:

The positive electrode active material for a non-aqueous electrolyte secondary battery according to any one of Constitutions 1 to 4, wherein R represents a methyl group.

Constitution 7:

The positive electrode active material for a non-aqueous electrolyte secondary battery according to any one of Constitutions 1 to 6, wherein an amount of the sulfonate compound present on the surface of the lithium transition metal composite oxide is greater than or equal to 0.1 mass% and less than or equal to 2 mass% relative to a mass of the lithium transition metal composite oxide.

Constitution 8:

A positive electrode for a non-aqueous electrolyte secondary battery, including: the positive electrode active material for a non-aqueous electrolyte secondary battery according to any one of Constitutions 1 to 7.

Constitution 9:

A non-aqueous electrolyte secondary battery comprising:

a positive electrode including the positive electrode active material for a non-aqueous electrolyte secondary battery according to any one of Constitutions 1 to 7;
a negative electrode; and
a non-aqueous electrolyte.

REFERENCE SIGNS LIST

10 Secondary battery, 11 Positive electrode, 12 Negative electrode, 13 Separator, 14 Electrode assembly, 16 Outer case, 17 Sealing assembly, 18, 19 Insulating plate, 20 Positive lead, 21 Negative lead, 22 Grooved portion, 23 Internal terminal plate, 24 Lower vent member, 25 Insulating member, 26 Upper vent member, 27 Cap, 28 Gasket

## Claims

**1.** A positive electrode active material for a non-aqueous electrolyte secondary battery, including:

a lithium transition metal composite oxide; and
a sulfonate compound present on a surface of the lithium transition metal composite oxide, wherein
the lithium transition metal composite oxide has a layered structure, and contains greater than or equal to 70 mol% of Ni relative to a total number of moles of metal elements excluding Li,
when the lithium transition metal composite oxide is added to an alkaline solution and then distilled, and the distillate is absorbed into sulfuric acid and subjected to ion chromatographic analysis, ammonia is detected in an amount of greater than or equal to 2 ppm and less than or equal to 200 ppm relative to the lithium transition metal composite oxide,
when a filtrate of an aqueous dispersion prepared by dispersing 1 g of the lithium transition metal composite oxide in 70 ml of pure water is titrated with hydrochloric acid, and an acid consumption up to a first inflection point of a pH curve is denoted as X mol/g and an acid consumption up to a second inflection point is denoted as Y mol/g, a value of Y - X is greater than or equal to 50 μmol/g and less than or equal to 300 μmol/g and a value of X - (Y - X) is less than or equal to 150 μmol/g, and
the sulfonate compound is represented by the general formula I:

[Formula 1]

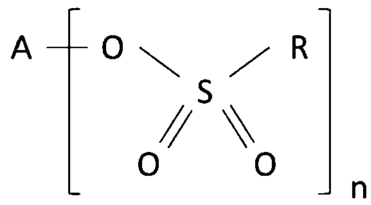

(I)

wherein A represents a group I element or a group II element, R represents a hydrocarbon group, and n represents 1 or 2.

**2.** The positive electrode active material for a non-aqueous electrolyte secondary battery according to claim 1, wherein the lithium transition metal composite oxide includes secondary particles each formed by aggregation of primary particles.

**3.** The positive electrode active material for a non-aqueous electrolyte secondary battery according to claim 1, wherein the A represents a group I element.

**4.** The positive electrode active material for a non-aqueous electrolyte secondary battery according to claim 1, wherein the A is Li.

**5.** The positive electrode active material for a non-aqueous electrolyte secondary battery according to claim 1, wherein the R represents an alkyl group.

**6.** The positive electrode active material for a non-aqueous electrolyte secondary battery according to claim 1, wherein the R represents a methyl group.

**7.** The positive electrode active material for a non-aqueous electrolyte secondary battery according to claim 1, wherein an amount of the sulfonate compound present on the surface of the lithium transition metal composite oxide is greater than or equal to 0.1 mass% and less than or equal to 2 mass% relative to a mass of the lithium transition metal composite oxide.

**8.** A positive electrode for a non-aqueous electrolyte secondary battery, including:
the positive electrode active material for a non-aqueous electrolyte secondary battery according to any one of claims 1 to 7.

**9.** A non-aqueous electrolyte secondary battery comprising:

a positive electrode including the positive electrode active material for a non-aqueous electrolyte secondary battery according to any one of claims 1 to 7; and
a negative electrode; and
a non-aqueous electrolyte.

Figure 1

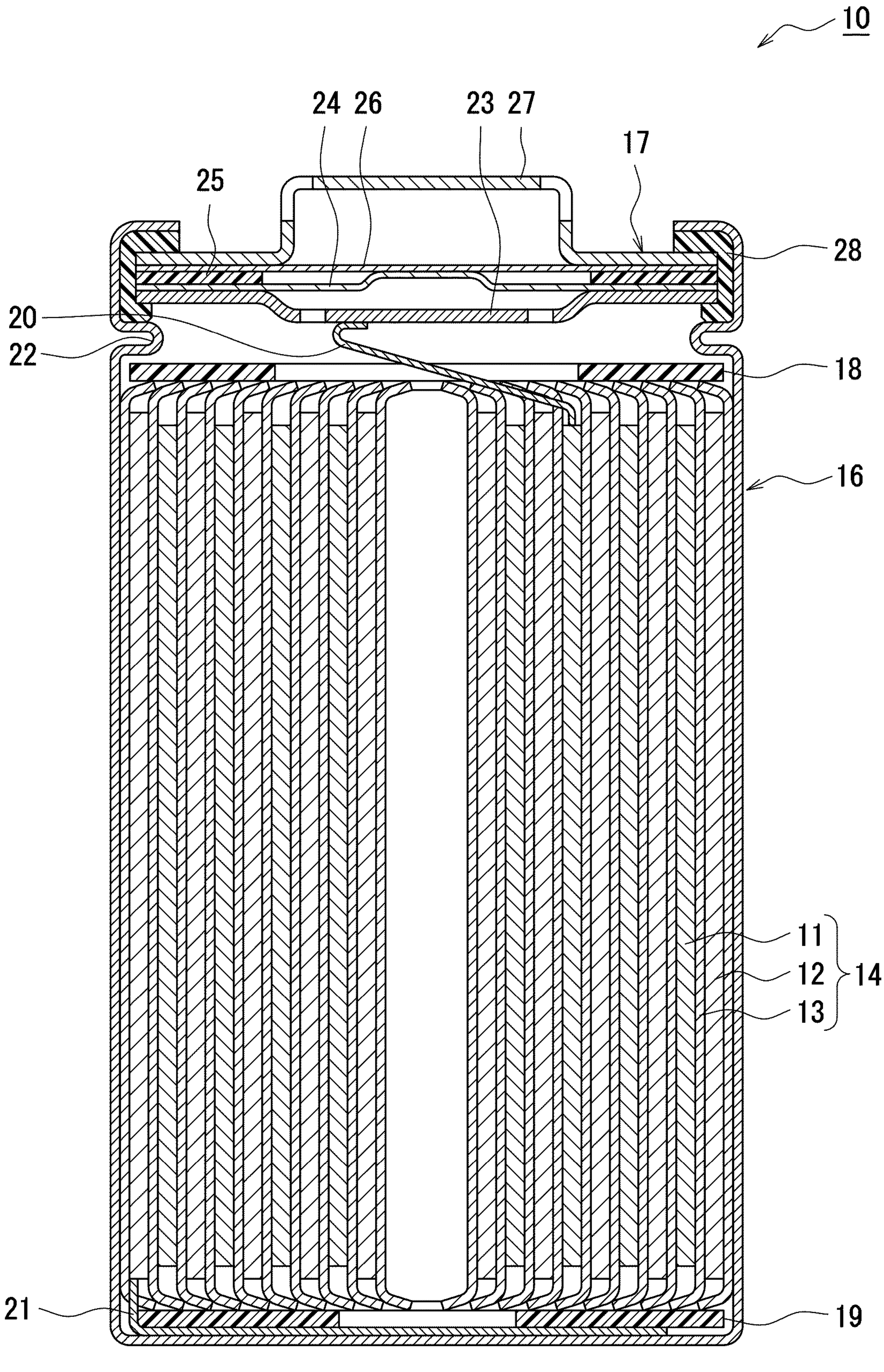

**INTERNATIONAL SEARCH REPORT**

International application No.
**PCT/JP2024/018088**

**A. CLASSIFICATION OF SUBJECT MATTER**

***H01M 4/525***(2010.01)i; ***H01M 4/36***(2006.01)i
FI: H01M4/525; H01M4/36 C

According to International Patent Classification (IPC) or to both national classification and IPC

**B. FIELDS SEARCHED**

Minimum documentation searched (classification system followed by classification symbols)

H01M4/525; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/193874 A1 (PANASONIC INTELLECTUAL PROPERTY MANAGEMENT CO., LTD.) 10 October 2019 (2019-10-10) claims | 1-9 |
| A | JP 2019-169286 A (TDK CORPORATION) 03 October 2019 (2019-10-03) claims, paragraphs [0023]-[0036], example 15 | 1-9 |
| A | JP 2017-197405 A (UMICORE) 02 November 2017 (2017-11-02) | 1-9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/018088**

| Patent document cited in search report | Publication date (day/month/year) | Patent family member(s) | Publication date (day/month/year) |
|---|---|---|---|
| WO 2019/193874 A1 | 10 October 2019 | US 2021/0104736 A1 | |
| | | CN 111937194 A | |
| JP 2019-169286 A | 03 October 2019 | (Family: none) | |
| JP 2017-197405 A | 02 November 2017 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020511642 A